# EUROPEAN PATENT SPECIFICATION

(11) **EP 0 522 823 B1**
(45) Date of publication and mention of the grant of the patent: **08.11.1995**
(21) Application number: 92306210.3
(22) Date of filing: 07.07.1992
(51) Int. Cl.: B01D 21/24

(54) **Apparatus for treatment of a liquid**
Vorrichtung zur Flüssigkeitsbehandlung
Appareil pour le traitement de liquide

(30) Priority: 09.07.1991 GB 9114818; 04.03.1992 GB 9204889
(43) Date of publication of application: 13.01.1993
(73) Proprietor: THAMES WATER UTILITIES LIMITED, Reading Berks. RG1 8DB (GB)
(72) Inventor: Surtees, Roger Charles, Maidenhead, Berkshire SL6 7PA (GB); Waters, Colin John, Reading, Berkshire RG2 0JN (GB)
(74) Representative: Johnson, Terence Leslie

(56) References cited:
- DE-A- 2 013 421
- DE-A- 2 740 645
- DE-A- 2 803 328
- DE-A- 2 904 838
- DE-A- 3 137 216
- DE-A- 3 708 079
- DE-A- 3 909 027
- DE-B- 1 119 187
- MACHINE DESIGN, vol. 60, nr. 15, page 62.

## Description

The invention relates to apparatus for treatment of a liquid, particularly for the removal of undesired matter carried by activated sludge settling tanks, particularly at the surface thereof.

Such settling tanks are often installed in sewage works, where the undesired matter can be scum at the surface, solids floating on or in the liquid, or a mixture of both scum and solids for example. Scum often develops on the liquid surface of activated sludge settling tanks as a result of desludging difficulties, denitrification, and non-degradable surfactants such as chocolate mousse present in the sewage. An outlet weir around the tank periphery generally incorporates a scum board. These scum boards are positioned in front of the weir and prevent scum from passing thereover. Facilities must be provided to allow this floating material which is retained on the tank surface by the scum boards to be removed as frequently as possible. This material is usually collected and concentrated by a surface boom connected to a travelling bridge scraper, and then removed, usually once every revolution of the scraper, by an activator and scum trumpet device. This method of scum removal has disadvantages, however, in that scum removed must be relayed from the scraper bridge to the return sludge system. This necessitates the employment of expensive and complicated pipework. In addition only a small amount of scum is removed as the travelling scraper bridge may only complete a revolution once every hour.

German Patent No. DE 2 740 645 describes a stilling tank of annular form receiving scum collected by means of a rotating bridge, but the collecting means is in the form of a radially extending slit pipe which does not extend to the tank periphery. Likewise, DE 3 708 079 describes an elongate collector, an external pump and a separate scum thickener, all requiring extensive and expensive pipe work.

According to one aspect of the invention there is provided apparatus for removal of scum or the like from the surface of a tank of liquid, comprising a collector device for collecting scum, boom means carrying the collector device and adapted to sweep over the tank at or adjacent the liquid surface for providing relative movement between the collector device and, in use, liquid in the tank, whereby to remove scum from the liquid into the collector device, characterized by the collector device being adjacent an end of the boom means adjacent a peripheral wall of the tank and comprising a well having a plurality of sides and a weir defining an entry into the collector device, by pump means for evacuating collected scum from the collector device, by the pump means being within the collector device and in use below the liquid level, by conduit means connected to the pump means for conducting evacuated scum to a further tank, and by the further tank comprising a stilling tank within the boundary of the first mentioned tank.

The collector device may be carried by a boom device which may be adapted to sweep over the tank at or adjacent the liquid surface and provide the relative motion. This provides a relatively simple construction.

The collector device may comprise a receptacle having a plurality of sides and a further side which may define an entry into the receptacle. This provides for a relatively simple construction of receptacle from say, sheet metal.

The further side may comprise a weir adjustable in height by adjusting means. This provides for gathering of scum of varying thickness on the surface of a liquid.

The adjusting means may comprise a manually extensible rod and a pivotable mounting of the weir whereby on extension or retraction of the rod, the weir pivots to adjust the height thereof. This provides for simple operation, particularly where the extensible rod comprises a rotatable screw rod. This construction provides for direct action by an operator.

There may also be entrapment means in the conduit means, for obviating the entrainment of solids in the liquids; thus the entrapment means may comprise an entrapment member which may be partly external to the conduit means, which in this case may comprise a feed to the stilling tank.

The entrapment means may comprise a module having an inlet and an outlet for liquid, and between them, the entrapment member. This provides a relatively simple construction and the entrapment member may comprise a grid or grille extending beyond the level of liquid in the conduit means where the entrapment means is in-line with the conduit means, preferably being in line and at the same level in the module.

The module may include a device to which matter trapped on the grid or grille may be removed for subsequent disposal, suitably a channel means built into the module. This provides for manually removal of debris caught on the grid or grille to the channel means by an operator.

The entrapment member may further comprise a filter bag means, which may be situated at or adjacent an outlet of the conduit means. This provides for a positive collection of suspended debris.

According to a second aspect, the invention provides an activated sludge settling tank for a sewage works, comprising a peripheral wall, a first weir inboard of the peripheral wall, a stilling tank within the settling tank, a bridge scraper boom means extending between the stilling tank and peripheral wall and adapted to rotate round the tank, providing relative motion therebetween, and carrying a collector device for scum, whereby to remove scum from the surface of liquid in the tank, characterized by the collector device being adjacent the distal end of the boom means adjacent the peripheral wall of the tank and comprising a well having a plurality of sides and a second weir defining an entry into the collector device, by pump means for evacuating collected scum from the collector device by the pump means being within the collector device and in use below the liquid level, and by conduit means extending from the pump means to the stilling tank which is within the boundary of the first-mentioned tank.

The boundary walls may comprise the second weir which may be adjustable.

The weir may be adjustable by a manually extensible rod and a pivot mounting of the weir whereby on extension or retraction of the rod, the weir pivots to adjust the height thereof. Suitably, the extensible rod may comprise a rotatable screw rod.

The settling tank may comprise entrapment means in the conduit means, preferably comprising an entrapment member which may be partly external to the conduit means.

The entrapment means may comprise a module having an inlet and an outlet for liquid, and, between them, the entrapment member, preferably in the form of a grid or grille extending beyond the level of liquid in the conduit means where the entrapment means is in-line with the conduit means.

The inlet and outlet may be at the same level in the module. This provides for a direct flow through the grid or grille.

There may be a device comprising a channel means built into the module, for removal of solid matter from the grid or grille, for subsequent removal.

Alternatively, the entrapment member may comprise a filter bag means, which is suitably situated at or adjacent the outlet of the conduit means.

According to a third aspect of the invention there is provided a sewage works including apparatus or an activated sludge settling tank as hereinbefore defined.

Apparatus embodying the invention is hereinafter described, by way of example, with reference to the accompanying drawings.
Fig.1 is a plan view of the apparatus for removing scum from the liquid surface in an activated sludge settling tank, according to the invention;
Fig.2 is a side elevational view of the apparatus of Fig.1;
Fig.3 is an end elevational view of the apparatus of Figs. 1 and 2;
Fig.4 is a plan view of a first embodiment of entrapment means of apparatus according to the invention;
Fig.5 is a longitudinal cross-section of the apparatus of Fig.4;
Fig.6 is a perspective view, to an enlarged scale, of the apparatus of Figs. 4 and 5; and
Fig.7 is a schematic side elevational view of a second embodiment entrapment means of apparatus according to the invention.

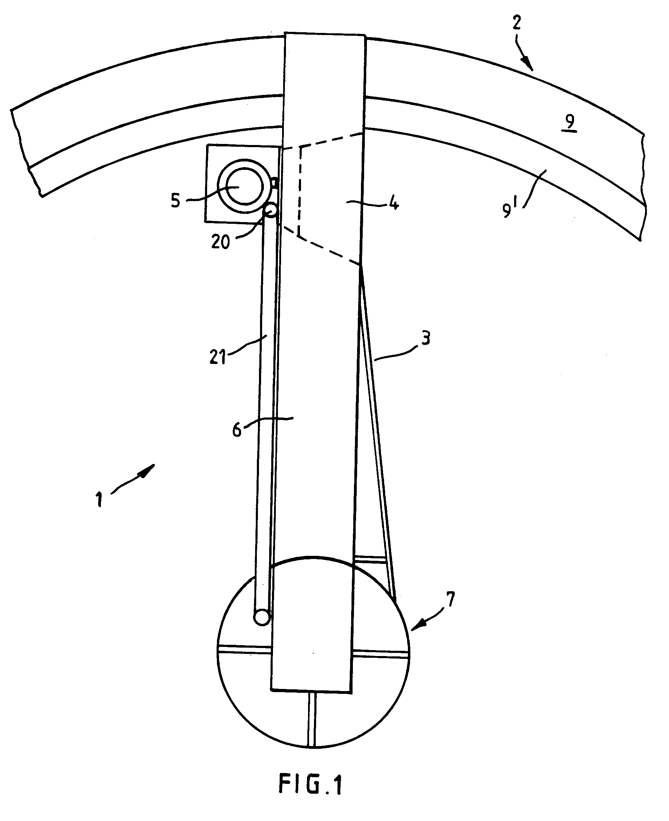

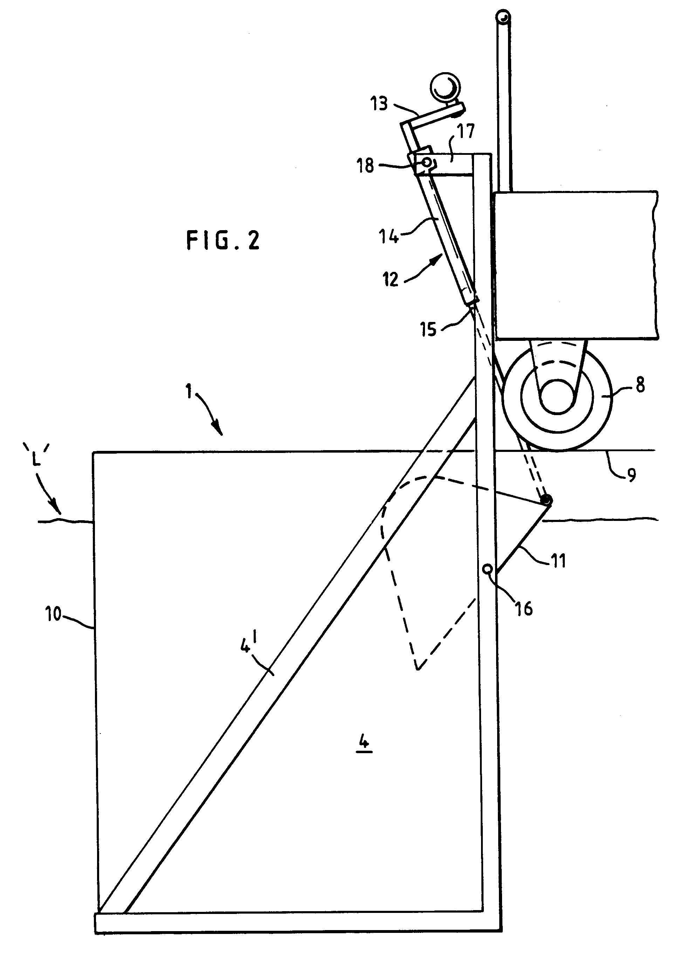

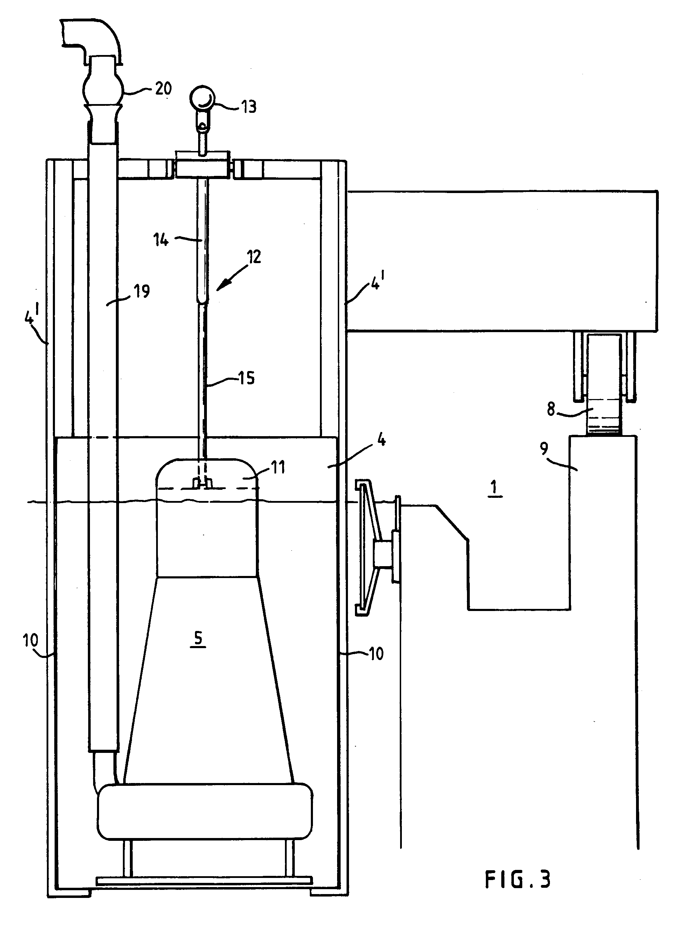

Referring firstly to Figs. 1 to 3 of the drawings, in which like parts are shown by like reference numerals, there is shown apparatus 1 for removal of scum or the like from the surface 'L' of liquid in a tank 2 of liquid, such as an activated sludge settling tank in a sewage works, comprising a device 3 for collecting scum on the surface, a collector device 4 carried by the device 3 and adapted to remove scum from the liquid surface 'L', and a pump 5 for evacuating scum from the collector device 4.

The settling tank 2 has a travelling bridge scraper 6 and scum boards.

The device 3 is a rotatable boom device of the bridge extending across the activated sludge settling tank 2, which is usually cylindrical, from a further or stilling tank 7, located substantially centrally of the tank 2. The device 3 is rotatable with the bridge 6 to sweep over the entire surface of liquid in the tank 2 in one revolution, being supported at the distal end by a wheel 8 running on a peripheral wall 9 of the tank 2, inboard of which wall 9 is a weir 9' for liquid free of scum to overflow to a take away.

The collector device 4 comprises a generally rectangular box carried by the boom device 3 adjacent the distal end thereof and adjacent the peripheral wall 9. The collector device 4 has an open top and a fixed base from which a plurality of side walls 10 extend to define the open top. One side wall of the side walls 10 in use is adapted to terminate below the liquid surface level and from which extends a weir 11 which is adjustable in height relative to the liquid surface by adjusting means in the form of a manually operable rod 12 which has a handle 13 and telescopically arranged screw engaged rod parts 14, 15 whereby on turning the handle 13 the rod part 15 is extended from or retracted into the rod part 14. The distal end of the rod part 15 is pivotably connected to the weir 11 which is itself pivotably connected at a pivot 16 to the lower wall 10 at a point thereof.

The rod 12 is supported at the handle end via a strut 17 to which the handle end is pivoted at a pivot 18. The pivots allow for pivotal movement of the rod and weir without imposing stress on the structure. The collector device 4 is supported by side straps 4' from the bridge 6, which also acts as a footway or gantry.

At the bottom of the collector device 4 is the pump 5, suitably a submersible 3" (7.62cm) pump which is operable continuously or in timed pulses of operation for evacuating scum from the collector device 4. In order to achieve this, there is a flexible conduit 19 leading from the pump 5 to connect via a union 20 such as a Bauer fitting to conduit means in the form of a delivery pipe 21 which passes along the bridge 6 to the central stilling tank or box 7.

In use, the collector device 4 is suspended in the liquid in the tank by the straps 4' so that the side walls 10 without the weir 11 just project above the liquid surface, the collector device 4 then being fixed and held in the liquid at an optimum depth by the straps 4'. The weir 11 is adjusted in position vertically by the handle 13 and rod 12 to be set to a height depending on the thickness of the scum. The bridge 6 and device 3 with the collector device 4 are rotated round the tank 2 by a motor (not shown) driving the wheel 8 so that there is relative (rotational) movement between the tank and the collector device 4 (as well as the bridge 6 and device 3 as these devices 3, 6 and 4 form a unitary unit). As the boom device 3 collects and concentrates the scum it flows over the weir 11 into an entry of the collector device 4 defined by the walls 10 and the weir 11, and the pump 5 evacuates the scum therefrom into the stilling tank 7 via the conduit 19 and pipe 21. The scum is "killed" in the stilling box 7. The discharge of the liquid into the stilling box 7 also stops any build up of scum at that point.

As the level of liquid in the collector device, or scoop means, 4 is always below the liquid surface level in the tank 2 whilst the pump 5 is running, there is a positive draw off of scum which is also assisted by the forward movement of the bridge 6, the entry to the device 4 over the weir 11 being at the forward end of the device 4, as considered in the direction of motion of the device 4 round the tank 2.

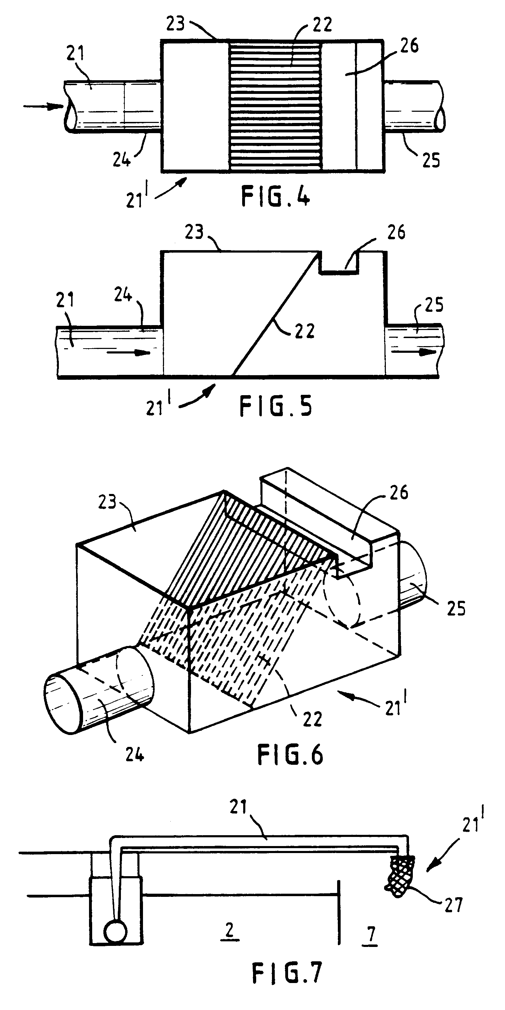

Referring now to Figs. 4 to 7 of the drawings, there is shown the pipe 21 for liquid and entrapment means 21' arranged in the liquid flow for removal of undesired matter from the liquid and including an entrapment member 22 which is at least partly external to the pipe 21.

In the embodiment Figs. 4 to 6, the entrapment means 22 comprises a module or body 23 which has an inclined grille forming the member 22 mounted between an inlet 24 and outlet 25, which are in line, at the same level, and suitably mounted in a liquid-tight manner intermediate the length of the pipe 21 which is in the form of a scum return pipe of the settling tank 2, the pipe 21 being directed to a central stilling chamber 7, of the tank 2. The outlet 25 can have an additional screen. The module or body 23 is open topped, and the grille 22 extends from the bottom of the module to the top and thus has its upper part as viewed, Figs. 4 and 5 external to the pipe 21.

The module also includes a device 26 in the form of a transverse channel which is for the reception of matter trapped on the grille 22 and for subsequent treatment thereof.

In use, flow of liquid passes through the module 23 from the inlet 24 to the outlet 25 (see the arrows) on its way to the central stilling chamber 7. Large particles of undesired matter such as plastics and latex normally floating on the surface of the tank pass into the module 23 and are caught on the grille 22, and sludge or scum particles rise and pass through for settlement as the grille 22 progressively blocks. Thus the liquid rises to new, unexposed, levels of the grille 22. Occasionally an operator can scrape off the build-up of solids into the channel 26 for removal and subsequent treatment.

In Fig. 7, the entrapment means 21' is mounted at the end of the pipe 19, where it discharges into the central stilling chamber 7 and comprises a flexible filter bag 27 of cloth, plastic or the like which is external to the pipe 19.

Moreover, it will be understood that the module and filter bag embodiments may be used in conjunction.

Moreover, it will be understood that the invention extends into a settling tank incorporating apparatus as hereinbefore defined.

It will be understood that apparatus embodying the invention is able to be retro fitted to an existing settling tank, and is relatively simple and inexpensive to install in both old and new tanks. Moreover, an apparatus embodying the invention and as described with reference to the drawings has the following advantages:-
1. There is continuous removal of scum.
2. Any scum build up in the stilling box is killed.
3. There is positive draw at the surface of the tank.
4. The draw depth is adjustable to allow for thick consolidated build ups.
5. It can be used on a timer to save pumping costs.
6. No additional pipework and entry to the side of the tank is required.
7. Scum is killed within the tank.

## Claims

1. Apparatus for removal of scum or the like from the surface of a tank of liquid, comprising a collector device for collecting scum, boom means carrying the collector device and adapted to sweep over the tank at or adjacent the liquid surface for providing relative movement between the collector device and, in use, liquid in the tank, whereby to remove scum from the liquid into the collector device, characterized by the collector device (4) being adjacent the distal end of the boom means (3) adjacent a peripheral wall (9) of the tank (2) and comprising a well having a plurality of sides (10) and a weir (11) defining an entry into the collector device (4), by pump means (5) for evacuating collected scum from the collector device (4), by the pump means (5) being within the collector device (4) and in use below the liquid level, by conduit means (19, 21) connected to the pump means (5) for conducting evacuated scum to a further tank (7), and by the further tank (7) comprising a stilling tank within the boundary of the first mentioned tank (2).

2. Apparatus according to Claim 1, characterized by the weir (11) being adjustable in height by adjusting means (12).

3. Apparatus according to Claim 2, characterized by the adjusting means (12) comprising a manually extensible rod (14, 15) and by a pivotable mounting (16) of the weir (11) whereby on extension or retraction of the rod, the weir pivots to adjust the height thereof.

4. Apparatus according to Claim 3, characterized by the extensible rod (14) comprising a rotatable screw rod.

5. Apparatus according to Claim 5 or Claim 6, characterized by entrapment means (21') in the conduit means (18, 21).

6. Apparatus according to Claim 5, characterized by the entrapment means (21') comprising an entrapment member (22) which is partly external to the conduit means.

7. Apparatus according to Claim 6, characterized by the entrapment means (21') comprising a module (23) having an inlet (24) and an outlet (25) for liquid and, between them, the entrapment member (22).

8. Apparatus according to Claim 7, characterized by the entrapment member (22) comprising a grid or grille extending beyond the level of liquid in the conduit means where the entrapment means is in-line with the conduit means (19, 21).

9. Apparatus according to Claim 8, characterized by the inlet (24) and outlet (25) being in line and at the same level in the module.

10. Apparatus according to Claim 9, characterized by the module (23) including a device (26) to which matter trapped on the grid or grille may be removed for subsequent disposal.

11. Apparatus according to Claim 10, characterized by the device (26) comprising a channel means built into the module (23).

12. Apparatus according to Claim 5, characterized by the entrapment means (21') comprising a filter bag means (27).

13. Apparatus according to Claim 12, characterized by the filter bag means (27) being situated at or adjacent an outlet of the conduit means (19, 21).

14. An activated sludge settling tank for a sewage works, comprising a peripheral wall, a first weir inboard of the peripheral wall, a stilling tank within the settling tank, a bridge scraper boom means extending between the stilling tank and peripheral wall and adapted to rotate round the tank, providing relative motion therebetween, and carrying a collector device for scum, whereby to remove scum from the surface of liquid in the tank, characterized by the collector device (4) being adjacent the distal end of the boom means (3) adjacent the peripheral wall (9) of the tank (2) and comprising a well having a plurality of sides (10) and a second weir (11) defining an entry into the collector device (4), by pump means (5) for evacuating collected scum from the collector device (4) by the pump means (5) being within the collector device (4) and in use below the liquid level, and by conduit means (19, 21) extending from the pump means (5) to the stilling tank (7) which is within the boundary of the first-mentioned tank (2).

15. A settling tank according to Claim 14, characterized by the pump means (5) being operable intermittently.

16. A settling tank according to either of Claims 14 or 15, characterized by the second weir (11) being adjustable by a manually extensible rod (24, 15) and a pivot (16) mounting of the weir whereby on extension or retraction of the rod, the weir pivots to adjust the height thereof.

17. A settling tank according to Claim 16, characterized by the extensible rod comprising a rotatable screw rod (15).

18. A settling tank according to any of Claims 14 to 17, characterized by entrapment means (21') in the conduit means (19, 21).

19. Apparatus according to Claim 18, characterised by the entrapment means (21') comprising an entrapment member (22) which is partly external to the conduit means (19, 21).

20. Apparatus according to Claim 18, characterized by the entrapment means (21') comprising a module (23) having an inlet (24) and an outlet (25) for liquid and, between them, the entrapment member.

21. Apparatus according to Claim 20, characterized by the entrapment member (22) comprising a grid or grille extending beyond the level of liquid in the conduit means (19, 21) where the entrapment means is in-line with the conduit means.

22. Apparatus according to Claim 21, characterized by the inlet (24) and outlet (25) being at the same level in the module (23).

23. Apparatus according to any of Claims 20 to 22, characterized by a device (26) comprising a channel means built into the module (23).

24. Apparatus according to Claim 18 or 19, characterized by the entrapment means (21') comprising a filter bag means (27).

25. Apparatus according to Claim 24, characterized by the filter bag means (27) being situated at or adjacent the outlet of the conduit means (19, 21).

26. A sewage works, characterized by apparatus or an activated sludge settling tank according to any preceding claim.

## Patentansprüche

1. Vorrichtung zum Entfernen von Schwimmschlamm oder dergleichen von der Oberfläche eines Flüssigkeitstanks, die folgendes umfaßt: eine Sammelvorrichtung zum Sammeln von Schwimmschlamm, einen Ausleger, der die Sammelvorrichtung trägt und an oder in der Nähe der Flüssigkeitsoberfläche über den Tank streicht, um eine relative Bewegung zwischen der Sammelvorrichtung und, bei Gebrauch, der Flüssigkeit in dem Tank zu erzeugen, so daß der Schwimmschlamm von der Flüssigkeit in die Sammelvorrichtung entfernt wird, dadurch gekennzeichnet, daß sich die Sammelvorrichtung (4) in der Nähe des distalen Endes des Auslegers (3) in der Nähe einer Umfangswand (9) des Tanks (2) befindet und einen Schacht mit einer Mehrzahl von Seiten (10) und einem Wehr (11) aufweist, das einen Eingang in die Sammelvorrichtung (4) definiert, dadurch, daß eine Pumpe (5) zum Absaugen des gesammelten Schwimmschlamms von der Sammelvorrichtung (4) vorhanden ist, dadurch, daß sich die Pumpe (5) innerhalb der Sammelvorrichtung (4) und bei Gebrauch unterhalb des Flüssigkeitsstandes befindet, dadurch, daß eine mit der Pumpe (5) verbundene Leitung (19, 21) zum Abführen des absaugten Schwimmschlamms zu einem weiteren Tank (7) vorhanden ist, und dadurch, daß der weitere Tank (7) einen Beruhigungstank innerhalb der Begrenzung des erstgenannten Tanks (2) aufweist.

2. Vorrichtung nach Anspruch 1, dadurch gekennzeichnet, daß das Wehr (11) mit Hilfe eines Einstellmittels (12) in der Höhe verstellbar ist.

3. Vorrichtung nach Anspruch 2, dadurch gekennzeichnet, daß das Einstellmittel (12) einen manuell verlängerbaren Stab (14, 15) umfaßt und dadurch, daß das Wehr (11) schwenkbar montiert (16) ist, so daß durch eine Verlängerung oder eine Verkürzung des Stabes das Wehr schwenkt und sich so in seiner Höhe verstellt.

4. Vorrichtung nach Anspruch 3, dadurch gekennzeichnet, daß der verlängerbare Stab (14) einen drehbaren Gewindestab umfaßt.

5. Vorrichtung nach Anspruch 5 oder Anspruch 6, dadurch gekennzeichnet, daß sich in der Leitung (18, 21) ein Einschlußmittel (21') befindet.

6. Vorrichtung nach Anspruch 5, dadurch gekennzeichnet, daß das Einschlußmittel (21') ein Einschlußelement (22) aufweist, das sich teilweise außerhalb der Leitung befindet.

7. Vorrichtung nach Anspruch 6, dadurch gekennzeichnet, daß das Einschlußmittel (21') ein Modul (23) mit einem Einlaß (24) und einem Auslaß (25) für Flüssigkeit und zwischen diesen das Einschlußelement (22) umfaßt.

8. Vorrichtung nach Anspruch 7, dadurch gekennzeichnet, daß das Einschlußelement (22) einen Rost oder Grill aufweist, der über den Stand der Flüssigkeit in der Leitung hinaus verläuft, wo das Einschlußmittel mit der Leitung (19, 21) fluchtet.

9. Vorrichtung nach Anspruch 8, dadurch gekennzeichnet, daß der Einlaß (24) und der Auslaß (25) in dem Modul miteinander fluchten und sich auf derselben Höhe befinden.

10. Vorrichtung nach Anspruch 9, dadurch gekennzeichnet, daß das Modul (23) eine Vorrichtung (26) aufweist, auf die auf dem Rost oder Grill eingeschlossene Materie für die nachfolgende Entsorgung entfernt werden kann.

11. Vorrichtung nach Anspruch 10, dadurch gekennzeichnet, daß die Vorrichtung (26) einen Kanal aufweist, der in das Modul (23) eingebaut ist.

12. Vorrichtung nach Anspruch 5, dadurch gekennzeichnet, daß das Einschlußmittel (21') einen Filterbeutel (27) aufweist.

13. Vorrichtung nach Anspruch 12, dadurch gekennzeichnet, daß sich der Filterbeutel (27) an einem Auslaß oder in der Nähe eines Auslasses der Leitung (19, 21) befindet.

14. Belebtschlamm-Absitztank für eine Kläranlage, umfassend eine Umfangswand, ein erstes Wehr innerhalb der Umfangswand, einen Beruhigungstank innerhalb des Absitztanks, einen Schaberbrückenausleger, der zwischen dem Beruhigungstank und der Umfangswand verläuft und sich um den Tank dreht, um so eine relative Bewegung dazwischen zu erzeugen, und der eine Sammelvorrichtung für Schwimmschlamm trägt, um so Schwimmschlamm von der Flüssigkeitsoberfläche in dem Tank zu entfernen, dadurch gekennzeichnet, daß sich die Sammelvorrichtung (4) in der Nähe des distalen Endes des Auslegers (3) in der Nähe der Umfangswand (9) des Tanks (2) befindet und einen Schacht mit einer Mehrzahl von Seiten (10) und einem zweiten Wehr (11) aufweist, das einen Eingang in die Sammelvorrichtung (4) definiert, dadurch, daß eine Pumpe (5) zum Absaugen von angesammeltem Schwimmschlamm von der Sammelvorrichtung (4) vorhanden ist, dadurch, daß sich die Pumpe (5) innerhalb der Sammelvorrichtung (4) und bei Gebrauch unterhalb des Flüssigkeitsstandes befindet, und dadurch, daß eine Leitung (19, 21) von der Pumpe (5) zu dem Beruhigungstank (7) verläuft, der sich innerhalb der Begrenzung des erstgenannten Tanks (2) befindet.

15. Absitztank nach Anspruch 14, dadurch gekennzeichnet, daß die Pumpe (5) intermittierend betrieben werden kann.

16. Absitztank nach einem der Ansprüche 14 oder 15, dadurch gekennzeichnet, daß das zweite Wehr (11) mit Hilfe eines manuell verlängerbaren Stabes (24, 15) und einer Schwenkbefestigung (16) des Wehrs verstellbar ist, so daß durch eine Verlängerung oder eine Verkürzung des Stabes das Wehr schwenkt und sich so in seiner Höhe verstellt.

17. Absitztank nach Anspruch 16, dadurch gekennzeichnet, daß der verlängerbare Stab einen drehbaren Gewindestab (15) umfaßt.

18. Absitztank nach einem der Ansprüche 14 bis 17, dadurch gekennzeichnet, daß sich in der Leitung (19, 21) ein Einschlußmittel (21') befindet.

19. Vorrichtung nach Anspruch 18, dadurch gekennzeichnet, daß das Einschlußmittel (21') ein Einschlußelement (22) aufweist, das sich teilweise außerhalb der Leitung (19, 21) befindet.

20. Vorrichtung nach Anspruch 18, dadurch gekennzeichnet, daß das Einschlußmittel (21') ein Modul (23) mit einem Einlaß (24) und einem Auslaß (25) für Flüssigkeit und zwischen diesen das Einschlußelement (22) aufweist.

21. Vorrichtung nach Anspruch 20, dadurch gekennzeichnet, daß das Einschlußelement (22) einen Rost oder Grill aufweist, der über den Stand der Flüssigkeit in der Leitung (19, 21) hinaus verläuft, wo das Einschlußmittel mit der Leitung fluchtet.

22. Vorrichtung nach Anspruch 21, dadurch gekennzeichnet, daß sich der Einlaß (24) und der Auslaß (25) in dem Modul auf derselben Höhe befinden.

23. Vorrichtung nach Anspruch 20 bis 22, dadurch gekennzeichnet, daß eine Vorrichtung (26) einen Kanal aufweist, der in das Modul (23) eingebaut ist.

24. Vorrichtung nach Anspruch 18 oder 19, dadurch gekennzeichnet, daß das Einschlußmittel (21') einen Filterbeutel (27) aufweist.

25. Vorrichtung nach Anspruch 24, dadurch gekennzeichnet, daß sich der Filterbeutel (27) an dem Auslaß oder in der Nähe des Auslasses der Leitung (19, 21) befindet.

26. Kläranlage, gekennzeichnet durch eine Vorrichtung oder eine Belebtschlamm-Absitztank nach einem der vorhergehenden Ansprüche.

## Revendications

1. Appareil pour enlever l'écume ou analogue de la surface d'une cuve de liquide, comprenant un dispositif collecteur pour recueillir l'écume, un moyen de bras portant le dispositif collecteur et adapté pour être balayé au-dessus de la cuve au niveau de ou adjacent à la surface du liquide pour produire un mouvement relatif entre le dispositif collecteur et, en cours d'utilisation, le liquide dans la cuve, grâce auquel on enlève l'écume du liquide et on la passe dans le dispositif collecteur, caractérisé par le fait que le dispositif collecteur (4) est adjacent à l'extrémité distale du moyen de bras (3) adjacent à une paroi périphérique (9) de la cuve (2) et comprenant un réservoir possédant une pluralité de côtés (10) et un déversoir (11) définissant une entrée dans le dispositif collecteur (4), par un moyen de pompe (5) servant à évacuer l'écume recueillie du dispositif collecteur (4), par le fait que le moyen de pompe (5) est à l'intérieur du dispositif collecteur (4) et est utilisé en dessous du niveau du liquide, par un moyen de conduit (19, 21) raccordé au moyen de pompe (5) pour conduire l'écume évacuée jusqu'à une cuve supplémentaire (7), et par le fait que la cuve supplémentaire (7) comprend une cuve de jaugeage au sein des limites de la première cuve mentionnée (2).

2. Appareil selon la revendication 1, caractérisé par un déversoir (11) réglable en hauteur par un moyen de réglage (12).

3. Appareil selon la revendication 2, caractérisé par le fait que le moyen de réglage (12) comprend une tige extensible manuellement (14, 15) et par le fait que le déversoir (11) est monté de manière pivotable (16) grâce à quoi lors de l'extension ou de la rétraction de la tige, le déversoir pivote pour régler la hauteur de celui-ci.

4. Appareil selon la revendication 3, caractérisé par le fait que la tige extensible (14) comprend une tige filetée capable de rotation.

5. Appareil selon la revendication 5 ou la revendication 6, caractérisé par un moyen de rétention (21') dans le moyen de conduit (18, 21).

6. Appareil selon la revendication 5, caractérisé par le fait que le moyen de rétention (21') comprend un organe de rétention (22) qui est partiellement à l'extérieur du moyen de conduit.

7. Appareil selon la revendication 6, caractérisé par le fait que le moyen de rétention (21') comprend un module (23) ayant une entrée (24) et une sortie (25) pour du liquide, et entre celles-ci, l'organe de rétention (22).

8. Appareil selon la revendication 7, caractérisé par le fait que l'organe de rétention (22) comprend une grille se prolongeant au-delà du niveau du liquide dans le moyen de conduit où le moyen de rétention est en ligne avec le moyen de conduit (19, 21).

9. Appareil selon la revendication 8, caractérisé par le fait que l'entrée (24) et la sortie (25) sont en ligne et au même niveau dans le module.

10. Appareil selon la revendication 9, caractérisé par le fait que le module (23) comporte un dispositif (26) dans lequel on peut apporter des matériaux retenus sur la grille pour s'en débarasser ultérieurement.

11. Appareil selon la revendication 10, caractérisé par le fait que le dispositif (26) comprend un moyen en canal construit dans le module (23).

12. Appareil selon la revendication 5, caractérisé par le fait que le moyen de rétention (21') comprend un moyen de filtre à sacs (27).

13. Appareil selon la revendication 12, caractérisé par le fait que le moyen de filtre à sacs (27) est situé au niveau d'une sortie du moyen de conduit (19, 21) ou adjacent à celle-ci.

14. Cuve de décantation de boue activée pour installation d'égout, comprenant une paroi périphérique, un premier déversoir en-dedans de la paroi périphérique, une cuve de jaugeage à l'intérieur de la cuve de décantation, un moyen de bras de raclage de pont s'étendant entre la cuve de jaugeage et la paroi périphérique et adapté pour effectuer une rotation autour de la cuve, effectuant un mouvement relatif dans cet intervalle, et portant un dispositif collecteur d'écume, grâce auquel on enlève l'écume de la surface du liquide dans la cuve, caractérisée par le fait que le dispositif collecteur (4) est adjacent à l'extrémité distale du moyen de bras (3) adjacent à la paroi périphérique (9) de la cuve (2) et comprenant un réservoir ayant une pluralité de côtés (10) et un second déversoir (11) définissant une entrée dans le dispositif collecteur (4), par un moyen de pompe (5) servant à évacuer l'écume recueillie du dispositif collecteur (4), par le fait que le moyen de pompe (5) est à l'intérieur du dispositif collecteur (4) et est utilisé en dessous du niveau du liquide, et par le fait que des moyens de conduit (19, 21) s'étendent depuis le moyen de pompe (5) jusqu'à la cuve de jaugeage (7) qui est à l'intérieur des limites de la cuve (2) que l'on a mentionné en premier.

15. Cuve de décantation selon la revendication 14, caractérisée par le fait que le moyen de pompe (5) est capable de fonctionnement de manière intermittente.

16. Cuve de décantation selon l'une ou l'autre des revendications 14 ou 15, caractérisée par le fait que le second déversoir (11) est réglable par une tige extensible manuellement (24, 15) et par un montage à pivot (16) du déversoir grâce auquel lors de l'extension ou de la rétraction de la tige, le déversoir pivote pour régler la hauteur de celui-ci.

17. Cuve de décantation selon la revendication 16, caractérisée par le fait que la tige extensible comprend une tige filetée capable de rotation (15).

18. Cuve de décantation selon l'une quelconque des revendications 14 à 17, caractérisée par un moyen de rétention (21') dans le moyen de conduit (19, 21).

19. Appareil selon la revendication 18, caractérisé par le fait que le moyen de rétention (21') comprend un organe de rétention (22) qui est partiellement à l'extérieur du moyen de conduit (19, 21).

20. Appareil selon la revendication 18, caractérisé par le fait que le moyen de rétention (21') comprend un module (23) ayant une entrée (24) et une sortie (25) pour le liquide, et entre celles-ci, l'organe de rétention.

21. Appareil selon la revendication 20, caractérisé par le fait que l'organe de rétention (22) comprend une grille se prolongeant au-delà du niveau du liquide dans le moyen de conduit (19, 21) où le moyen de rétention est en ligne avec le moyen de conduit.

22. Appareil selon la revendication 21, caractérisé par le fait que l'entrée (24) et la sortie (25) sont au même niveau dans le module (23).

23. Appareil selon l'une quelconque des revendications 20 à 22, caractérisé par un dispositif (26) comprenant un moyen de canal construit dans le module (23).

24. Appareil selon la revendication 18 ou 19, caractérisé par le fait que le moyen de rétention (21') comprend un moyen de filtre à sacs (27).

25. Appareil selon la revendication 24, caractérisé par le fait que le moyen de filtre à sacs (27) est situé au niveau de la sortie du moyen de conduit (19, 21) ou adjacent à celle-ci.

26. Installation d'égout, caractérisée par un appareil ou une cuve de décantation de boue activée selon l'une quelconque des revendications précédentes.
